# FASCICULE DE BREVET EUROPEEN

(11) **EP 1 952 525 B1**
(45) Date de publication et mention de la délivrance du brevet: **09.08.2017**
(21) Numéro de dépôt: 06831293.3
(22) Date de dépôt: 24.10.2006
(51) Int. Cl.: H02P 9/30, H02P 9/36, H02P 9/32

(54) **ALTERNATEUR**
GENERATOR
ALTERNATOR

(30) Priorité: 04.11.2005 FR 0511264
(43) Date de publication de la demande: 06.08.2008
(73) Titulaire: MOTEURS LEROY-SOMER, 16000 Angoulême (FR)
(72) Inventeur: CZAJKOWSKI, François, F-16730 Linars (FR)
(74) Mandataire: Nony
(86) Numéro de dépôt international: PCT/FR2006/051101
(87) Numéro de publication internationale: WO 2007/051939

(56) Documents cités:
- EP-A1- 0 233 425
- US-A- 3 656 051
- US-A- 4 121 148
- US-A- 5 783 891

## Description

La présente invention concerne de manière générale la production d'un courant alternatif mono- ou polyphasé, par exemple triphasé, au moyen d'un alternateur, ce dernier comportant un rotor entraîné en rotation par un moteur thermique par exemple, et plus particulièrement la régulation de tels alternateurs.

Un alternateur comporte de manière connue, par exemple par US 5 783 891, un enroulement d'inducteur d'excitatrice alimenté en courant variable de manière à générer dans un enroulement d'induit d'excitatrice un courant alternatif, qui est ensuite redressé par un pont redresseur pour alimenter en courant redressé l'enroulement inducteur principal d'un alternateur. Cela permet d'éviter la présence de bagues et de balais entre la partie rotative et la partie fixe de l'alternateur.

Le contrôle de l'alternateur est traditionnellement effectué au moyen d'un régulateur de tension détectant des variations de la tension de sortie de l'alternateur, qui peuvent être dues à une variation de la charge appliquée à l'alternateur.

Le régulateur modifie le courant circulant dans l'enroulement d'inducteur d'excitatrices selon une boucle de régulation de la tension de sortie de l'alternateur.

Le temps de réponse de la boucle de régulation peut être relativement important, en particulier à cause du temps de réponse du régulateur de tension et des constantes de temps électriques et mécaniques de l'excitatrice et de l'alternateur.

On connaît par les brevets US 3 656 051 et US 4 453 120 des alternateurs comportant un circuit de contrôle rotatif disposé entre l'enroulement d'induit d'excitatrice et l'enroulement inducteur principal d'alternateur, ce circuit de contrôle étant configuré pour maintenir la tension de sortie de l'alternateur à un niveau prédéterminé en contrôlant le courant dans le rotor d'alternateur en réponse à un signal de commande reçu d'un circuit de comparaison.

Ces alternateurs comportent des excitatrices à inducteur à aimants permanents ou ayant un enroulement alimenté par une batterie.

Ces alternateurs présentent l'inconvénient d'un coût et d'un encombrement de l'excitatrice relativement importants, notamment pour les excitatrices à aimants permanents, ou d'une dépendance à une batterie et son système de charge.

Il existe donc un besoin pour disposer d'un alternateur ayant un encombrement et un coût de fabrication réduits.

On connaît par ailleurs par la demande de brevet EP-A1-0233 425 un dispositif de régulation d'un alternateur sans bagues ni balais dans lequel le circuit d'alimentation de l'enroulement d'inducteur d'excitation comprend des enroulements auxiliaires, destinés à recueillir la tension fondamentale et la tension de troisième harmonique de l'alternateur, et un organe de régulation du courant d'excitation, commandé d'une part en fonction des tensions fondamentales et de troisième harmonique et, d'autre part, de la tension de sortie de l'alternateur.

Dans cette demande, l'enroulement d'inducteur d'excitatrice est alimenté en courant variable par le régulateur de tension, ce qui peut générer des retards dans la réponse de l'alternateur et des variations de tension transitoires supérieures. En cas de variation de charge, la variation de courant dans l'enroulement d'inducteur d'excitatrice est retardée par la constante de temps de cet inducteur. La variation de tension aux bornes de l'alternateur qui en résulte est supérieure à ce qu'elle serait sans excitatrice.

Il existe donc un besoin pour bénéficier d'un alternateur ayant un temps de réponse plus rapide à une variation de charge, afin d'améliorer le comportement en régime transitoire, et notamment permettre de diminuer les variations de tension transitoires.

L'invention vise à répondre à tout ou partie des besoins précités.

Elle y parvient au moyen d'un alternateur comportant :
- un stator d'alternateur comportant :
   - un enroulement principal d'induit délivrant une tension de sortie,
   - au moins un enroulement auxiliaire,
   - un enroulement d'inducteur d'excitatrice alimenté par le ou les enroulements auxiliaires,
- un régulateur de la tension de sortie de l'alternateur,
- un rotor d'alternateur comportant :
   - un enroulement d'induit d'excitatrice,
   - un enroulement d'inducteur tournant alimenté par l'enroulement d'induit d'excitatrice,
   - un circuit de contrôle de l'alimentation de l'enroulement d'inducteur tournant, configuré pour maintenir l'amplitude de la tension de sortie de l'alternateur à un niveau prédéterminé en contrôlant l'alimentation de l'enroulement d'inducteur tournant en réponse à un signal de commande provenant du régulateur de tension de l'alternateur, le ou les enroulements auxiliaires générant une tension du fait de leur exposition à un champ magnétique généré par l'enroulement inducteur tournant.

L'invention a également pour objet, indépendamment ou en combinaison avec ce qui précède, un alternateur comportant :
- un stator d'alternateur comportant :
   - un enroulement principal d'induit délivrant une tension de sortie,
   - au moins un enroulement auxiliaire,
   - un enroulement d'inducteur d'excitatrice alimenté par le ou les enroulements auxiliaires à travers au moins un pont redresseur,
- un régulateur de la tension de sortie de l'alternateur,
- un rotor d'alternateur comportant :
   - un enroulement d'induit d'excitatrice, et
   - un enroulement d'inducteur tournant alimenté par l'enroulement d'induit d'excitatrice.

Selon un aspect de l'invention, l'enroulement d'inducteur d'excitatrice n'est pas alimenté par une batterie et de plus est différent d'un inducteur à aimants permanents, ce qui permet de réduire le coût de l'alternateur.

Avantageusement, l'alimentation de l'enroulement d'inducteur d'excitatrice se fait de manière non dépendante de l'enroulement d'induit principal et en particulier de la tension de sortie de l'alternateur, notamment grâce au fait que l'alimentation de l'enroulement d'inducteur d'excitatrice n'est pas contrôlée par le régulateur de tension.

L'utilisation d'enroulements auxiliaires au stator permet de fournir la tension d'excitation de l'excitatrice. L'enroulement d'inducteur d'excitatrice est alimenté par l'intermédiaire du ou des enroulements auxiliaires, qui assurent l'alimentation suffisante en courant dans toutes les conditions de fonctionnement de l'alternateur.

L'invention peut permettre aussi une régulation plus rapide, étant donné que le contrôle du courant d'excitation de l'enroulement d'inducteur tournant permet de diminuer le retard dû à l'excitatrice.

L'enroulement d'inducteur d'excitatrice peut être alimenté en courant continu par le ou les enroulements auxiliaires.

L'alternateur peut comporter plusieurs enroulements auxiliaires, par exemple deux.

Le circuit de contrôle peut comporter un redresseur, par exemple un pont redresseur, permettant de transformer la tension alternative de l'enroulement d'induit d'excitatrice en une tension redressée pour alimenter l'enroulement d'inducteur tournant.

Le dispositif de contrôle peut comporter un interrupteur électronique entre l'enroulement d'inducteur tournant et l'enroulement d'induit d'excitatrice, qui est commandé en fonction du signal de commande. L'interrupteur électronique peut par exemple être un composant statique.

Le circuit de contrôle peut être agencé pour commander l'interrupteur électronique selon une modulation de largeur d'impulsion.

Le circuit de contrôle peut comporter une diode de roue libre aux bornes de l'enroulement d'inducteur tournant.

Le régulateur de tension peut comporter une unité de traitement numérique, agencée pour surveiller la tension de sortie de l'alternateur et pour générer le signal de commande en fonction de la tension de sortie, notamment de la fréquence, de l'intégrale de fréquence et de la dérivée de la fréquence de la tension de sortie et de l'amplitude de l'intégrale et de la dérivée de l'amplitude de la tension de sortie.

Le signal de commande peut être transmis du régulateur de tension au circuit de contrôle par liaison inductive, notamment basse fréquence, par une liaison optique, notamment par infrarouge, ou par émission d'ondes électromagnétiques, notamment haute fréquence ou très haute fréquence.

L'alternateur peut comporter au moins un redresseur pour redresser une tension alternative générée par au moins un enroulement auxiliaire en une tension redressée alimentant l'enroulement d'inducteur d'excitatrice. La tension redressée peut également alimenter le régulateur de tension.

L'enroulement d'inducteur d'excitatrice peut être alimenté selon une modulation de largeur d'impulsion de façon à limiter le courant dans l'enroulement d'inducteur d'excitatrice.

La tension de sortie de l'enroulement principal du stator peut être triphasée.

L'invention a encore pour objet un groupe électrogène comportant un alternateur tel que défini ci-dessus. Le groupe électrogène peut par exemple comporter en outre un moteur thermique.

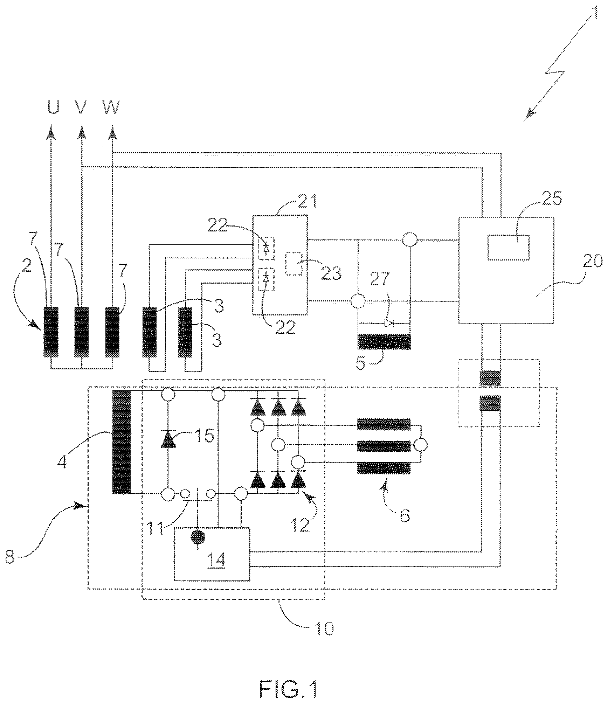

L'invention pourra être mieux comprise à la lecture de la description détaillée qui va suivre, d'un exemple de réalisation de l'invention et à l'examen du dessin annexé, sur lequel la figure 1 représente de façon schématique un alternateur réalisé conformément à l'invention.

L'alternateur 1 représenté à la figure 1 comporte un stator d'alternateur 2 comportant un enroulement principal d'induit 7 de stator délivrant une tension de sortie, par exemple une tension triphasée, les trois phases étant désignées U, V, W.

Chaque phase peut comporter un ou plusieurs enroulements.

Le stator 2 comporte également des enroulements auxiliaires 3 dont le rôle sera décrit plus loin.

L'alternateur comporte en outre un rotor d'alternateur 8 comportant un enroulement d'inducteur 4 tournant disposé sur l'arbre de la machine, l'arbre étant par exemple entraîné par un moteur thermique non illustré.

Les enroulements auxiliaires 3 génèrent une tension du fait de leur exposition à un champ magnétique variable généré par l'enroulement d'inducteur tournant et la réaction d'induit du stator.

L'alternateur 1 comporte une excitatrice comportant d'une part un enroulement d'inducteur 5 d'excitatrice fixe, alimenté par les enroulements auxiliaires 3 et d'autre part un enroulement induit d'excitatrice 6.

L'enroulement d'inducteur tournant 4 est alimenté par l'enroulement d'induit d'excitatrice 6 par l'intermédiaire d'un circuit de contrôle 10 configuré pour maintenir l'amplitude de la tension de sortie de l'alternateur à un niveau prédéterminé en contrôlant l'alimentation de l'enroulement inducteur tournant en réponse à un signal de commande provenant d'un régulateur 20 de tension de l'alternateur.

Dans l'exemple considéré, l'alternateur comporte deux enroulements auxiliaires 3 au stator.

L'enroulement d'inducteur d'excitatrice 5 peut être alimenté par une tension redressée à partir des enroulements auxiliaires 3, par exemple par l'intermédiaire d'un redresseur 21. Ce dernier peut comporter deux ponts redresseurs monophasés 22 disposés en parallèle du côté redressé, associés chacun à un enroulement auxiliaire 3. Le redresseur 21 peut comporter un système limiteur de courant 23, par exemple de type à modulation de largeur d'impulsions, utilisant un ou plusieurs interrupteurs statiques, par exemple des transistors IGBT. Une diode de roue libre 27 est reliée aux bornes de l'enroulement d'inducteur d'excitatrice 5.

Le système limiteur de courant a pour rôle de fixer un plafond d'excitation et de réduire ainsi la dérive thermique due à l'échauffement de l'enroulement d'inducteur d'excitatrice. Ce plafond d'excitation peut par exemple être réglable. Le courant d'excitation à fournir varie en fonction des tensions fondamentale et de troisième harmonique générées dans les enroulements auxiliaires 3 et est limité à un plafond réglable.

Le système limiteur de courant 23 et le régulateur de tension 20 peuvent par exemple être localisés dans le même boîtier.

Le régulateur de tension 20 peut être alimenté par la tension redressée en sortie du redresseur 21.

Le régulateur de tension 20 élabore un signal de commande qui est transmis du stator 2 au rotor 8 puis traité dans le circuit de contrôle 10 pour commander le courant d'excitation de l'enroulement d'inducteur tournant 4.

Le régulateur de tension 20 comporte par exemple une unité de traitement numérique 25 qui peut être agencée pour surveiller la tension de sortie de l'alternateur, par exemple entre deux phases, et pour générer le signal de commande en fonction de la tension de sortie et notamment de la valeur de la fréquence, de l'intégrale de la fréquence, et la dérivée de la fréquence de la tension de sortie et de l'amplitude, de l'intégrale et de la dérivée de l'amplitude de la tension de sortie.

L'unité de traitement numérique 25 peut être agencée pour mettre en oeuvre une stratégie de régulation de type proportionnelle-intégrale-dérivée de l'amplitude et de la fréquence du signal de tension de sortie subordonnée à des choix logiques dépendant des valeurs calculées comparées à des niveaux de référence. L'unité de traitement numérique 25 peut par exemple comporter un ou plusieurs circuits logiques, par exemple un ou plusieurs microprocesseurs ou microcontrôleurs.

Pour contrôler l'excitation de l'enroulement d'inducteur 4 tournant, on transmet le signal de commande de la partie fixe de l'alternateur à la partie rotative. La transmission peut se faire par exemple par une liaison inductive, ou par émission d'ondes électromagnétiques, ou encore par liaison optique, notamment opto-électronique.

La réception et la mise en forme du signal de commande peuvent être réalisées par le circuit de contrôle 10, lequel est par exemple alimenté par l'enroulement d'induit d'excitatrice 6.

Le circuit de contrôle 10 peut comporter un pont redresseur 12 permettant de transformer le courant alternatif multiphasé de l'enroulement d'induit d'excitatrice 6 en un courant redressé pour alimenter l'enroulement d'inducteur tournant 4.

Le circuit de contrôle 10 commande un interrupteur électronique 11, qui peut comporter un ou plusieurs composants, par exemple au moins un interrupteur électronique à semi-conducteur, par exemple un transistor IGBT.

Le signal de commande peut comporter au moins une information variant d'un minimum à un maximum. Le minimum correspond par exemple à un courant nul, l'interrupteur 11 étant continuellement ouvert et le maximum peut correspondre à l'interrupteur 11 continuellement fermé.

La loi de commande de l'interrupteur 11 en fonction du signal de commande peut ne pas être linéaire. L'interrupteur électrique 11 peut être commandé selon un mode de modulation de largeur d'impulsion variable.

Le circuit de contrôle 10 peut par exemple comporter à cet effet un système à découpage 14 de type à modulation de largeur d'impulsion.

Une diode de roue libre 15 peut être reliée aux bornes de l'enroulement d'inducteur tournant 4.

L'invention s'applique notamment à tous les alternateurs équipant des groupes électrogènes, quelle que soit leur application.

L'expression « comportant un » doit être comprise comme étant synonyme de « comportant au moins un », sauf si le contraire est spécifié.

## Revendications

1. Alternateur comportant :
- un stator (2) d'alternateur comportant :
- un enroulement d'induit (7) principal délivrant une tension de sortie,
- au moins un enroulement auxiliaire (3),
- un enroulement d'inducteur (5) d'excitatrice alimenté par le ou les enroulements auxiliaires,
- un régulateur (20) de la tension de sortie de l'alternateur,
- un rotor (8) d'alternateur comportant :
- un enroulement d'induit d'excitatrice (6),
- un enroulement d'inducteur (4) tournant alimenté par l'enroulement d'induit d'excitatrice (6),
- un circuit (10) de contrôle de l'alimentation de l'enroulement d'inducteur (4) tournant, configuré pour maintenir l'amplitude de la tension de sortie de l'alternateur à un niveau prédéterminé en contrôlant l'alimentation de l'enroulement d'inducteur (4) tournant en réponse à un signal de commande provenant du régulateur (20) de tension, le ou les enroulements auxiliaires (3) générant une tension du fait de leur exposition à un champ magnétique variable généré par l'enroulement d'inducteur (4) tournant.

2. Alternateur selon la revendication précédente, comportant au moins un redresseur (22) pour redresser une tension alternative générée par au moins un enroulement auxiliaire (3) en une tension redressée alimentant l'enroulement inducteur d'excitatrice (5).

3. Alternateur selon l'une des revendications précédentes, comportant deux enroulements auxiliaires (3).

4. Alternateur selon l'une quelconque des revendications précédentes, dans lequel le circuit de contrôle (10) comporte un redresseur (12) permettant de transformer une tension alternative de l'enroulement d'induit d'excitatrice (6) en une tension redressée pour alimenter l'enroulement d'inducteur tournant (4).

5. Alternateur selon l'une quelconque des revendications précédentes, dans lequel le dispositif de contrôle comporte un interrupteur électronique (11) entre l'enroulement d'inducteur tournant (4) et l'enroulement d'induit d'excitatrice (6), qui est commandé en fonction du signal de commande.

6. Alternateur selon la revendication 5, le circuit de contrôle (10) étant agencé pour commander l'interrupteur électronique (11) selon un mode de modulation de largeur d'impulsion.

7. Alternateur selon l'une quelconque des revendications précédentes, dans lequel le régulateur de tension (20) comporte une unité de traitement numérique (25) agencée pour surveiller la tension de sortie et pour générer le signal de commande en fonction de la tension de sortie, notamment en fonction de la fréquence, de l'intégrale et de la dérivée de la fréquence de la tension de sortie et de l'amplitude, de l'intégrale et de la dérivée de l'amplitude de la tension de sortie.

8. Alternateur selon l'une quelconque des revendications précédentes, dans lequel le signal de commande est transmis du régulateur de tension (20) au circuit de contrôle (10) par couplage inductif, par signal radiofréquence ou par liaison optique.

9. Alternateur selon la revendication 2, dans lequel la tension redressée alimente le régulateur de tension (20).

10. Alternateur selon l'une quelconque des revendications précédentes, dans lequel la tension de sortie est triphasée.

## Patentansprüche

1. Generator mit:
- einem Stator (2), der aufweist:
- eine Hauptinduktionswicklung (7), die eine Ausgangsspannung liefert,
- wenigstens eine Hilfswicklung (3),
- eine erregende Induktorwicklung (5), die durch die Hilfswicklung oder Hilfswicklungen gespeist wird,
- einen Regler (20) zur Regelung der Ausgangsspannung des Generators,
- einen Rotor (8), der aufweist:
- eine erregende Induktionswicklung (6),
- eine rotierende Induktorwicklung (4), die durch die erregende Induktionswicklung (6) gespeist wird,
- eine Schaltung (10) zur Steuerung der Speisung der rotierenden Induktorwicklung (4), welche Schaltung dazu konfiguriert ist, die Amplitude der Ausgangsspannung des Generators auf einem vorbestimmten Niveau zu halten, indem sie die Speisung der rotierenden Induktorwicklung (4) auf der Grundlage eines Signals des Spannungsreglers (20) kontrolliert, wobei die Hilfswicklung oder Hilfswicklungen (3) eine Spannung erzeugen, weil sie einem veränderlichen Magnetfeld ausgesetzt sind, das von der rotierenden Induktorwicklung (4) erzeugt wird.

2. Generator nach dem vorstehenden Anspruch, mit wenigstens einem Gleichrichter (22) zum Gleichrichten einer Wechselspannung, die von wenigstens einer Hilfswicklung (3) erzeugt wird, in eine gleichgerichtete Spannung, die die erregende Induktorwicklung (5) speist.

3. Generator nach einem der vorstehenden Ansprüche, mit zwei Hilfswicklungen (3).

4. Generator nach einem der vorstehenden Ansprüche, bei dem die Steuerschaltung (10) einen Gleichrichter (12) aufweist, der es gestattet, eine Wechselspannung der erregenden Induktionswicklung (6) in eine gleichgerichtete Spannung zur Speisung der rotierenden Induktorwicklung (4) umzuwandeln.

5. Generator nach einem der vorstehenden Ansprüche, bei dem die Steuereinrichtung einen elektronischen Schalter (11) zwischen der rotierenden Induktorwicklung (4) und der erregenden Induktionswicklung (6) aufweist, welcher Schalter in Abhängigkeit von dem Steuersignal gesteuert wird.

6. Generator nach Anspruch 5, bei dem die Steuerschaltung dazu ausgebildet ist, den elektronischen Schalter (11) in einem Pulsweiten-Modulationsmodus anzusteuern.

7. Generator nach einem der vorstehenden Ansprüche, bei dem der Spannungsregler (20) eine numerische Verarbeitungseinheit (25) aufweist, die dazu ausgebildet ist, die Ausgangsspannung zu überwachen und das Steuersignal in Abhängigkeit von der Ausgangsspannung zu erzeugen, insbesondere in Abhängigkeit von der Frequenz, dem Integral und der Ableitung der Frequenz der Ausgangsspannung und der Amplitude, dem Integral und der Ableitung der Amplitude der Ausgangsspannung.

8. Generator nach einem der vorstehenden Ansprüche, bei dem das Steuersignal von dem Spannungsregler (20) durch induktive Kopplung, über Funk oder durch optische Übertragung an die Steuerschaltung (10) übermittelt wird.

9. Generator nach Anspruch 2, bei dem die gleichgerichtete Spannung den Spannungsregler (20) versorgt.

10. Generator nach einem der vorstehenden Ansprüche, bei dem die Ausgangsspannung dreiphasig ist.

## Claims

1. An alternator comprising:
• an alternator stator (2) comprising:
• a main secondary winding (7) delivering an output voltage;
• at least one auxiliary winding (3); and
• an exciter field winding (5) powered by the auxiliary winding(s);
• a regulator (20) for regulating the output voltage of the alternator; and
• an alternator rotor (8) comprising:
• an exciter secondary winding (6);
• a rotary field winding (4) powered by the exciter secondary winding (6) ; and
• a control circuit (10) for controlling the power supply to the rotary field winding (4) and configured to maintain the amplitude of the output voltage from the alternator at a predetermined level by controlling the power supply to the rotary field winding (4) in response to a control signal coming from the voltage regulator (20), the auxiliary winding(s) (3) generating a voltage because they are exposed to a varying magnetic field generated by the rotary field winding (4) in rotation.

2. An alternator according to the preceding claim, comprising at least one rectifier (22) for rectifying an alternating voltage generated by at least one auxiliary winding (3) into a rectified voltage powering the exciter field winding (5).

3. An alternator according to any preceding claim, comprising two auxiliary windings (3).

4. An alternator according to any preceding claim, wherein the control circuit (10) comprises a rectifier (12) enabling an alternating voltage from the exciter secondary winding (6) to be transformed into a rectified voltage for powering the rotary field winding (4).

5. An alternator according to any preceding claim, wherein the control device comprises an electronic switch (11) between the rotary field winding (4) and the exciter secondary winding (6), which switch is controlled as a function of the control signal.

6. An alternator according to claim 5, the control circuit (10) being arranged to control the electronic switch (11) using a pulse width modulation mode.

7. An alternator according to any preceding claim, wherein the voltage regulator (20) comprises a digital processor unit (25) arranged to monitor the output voltage and to generate the control signal as a function of the output voltage, in particular as a function of the frequency, the integral, and the derivative of the frequency of the output voltage and as a function of the amplitude, the integral, and the derivative of the amplitude of the output voltage.

8. An alternator according to any preceding claim, wherein the control signal is transmitted from the voltage regulator (20) to the control circuit (10) by inductive coupling, by a radiofrequency signal, or by an optical connection.

9. An alternator according to claim 2, wherein the rectified voltage powers the voltage regulator (20).

10. An alternator according to any preceding claim, wherein the output voltage is a three-phase voltage.
